# EUROPÄISCHE PATENTANMELDUNG

(11) **EP 2 654 248 A1**
(43) Veröffentlichungstag der Anmeldung: **23.10.2013**
(21) Anmeldenummer: 12164926.3
(22) Anmeldetag: 20.04.2012
(51) Int. Cl.: H04L 12/437, H04L 12/26

(54) **Verfahren zum Erkennen von Übertragungsfehlern in einem Kommunikationsnetz und entsprechende Kommunikationsvorrichtung**

(71) Anmelder: Siemens Aktiengesellschaft, 80333 München (DE)
(72) Erfinder: Feld, Joachim, 90451 Nürnberg (DE)

(57) **Zusammenfassung**

Ein Kommunikationsverfahren (100) zum Erkennen von Übertragungsfehlern umfasst unter anderem folgende Schritte (110, 120,130,140,150): Senden (120) einer ersten Nachricht (51) mit einem Nachrichteninhalt von einer ersten Station (11) zu einer zweiten Station (12) über einen ersten (31) von mindestens zwei Übertragungswegen (31,32); Senden (130) einer zweiten Nachricht (52) mit demselben Nachrichteninhalt von der ersten Station (11) zu der zweiten Station (12) über einen zweiten (32) der mindestens zwei Übertragungswege (31,32); Vergleichen (140) der mittels der zweiten Station (12) empfangenen ersten Nachricht (51) mit der mittels der zweiten Station (12) empfangenen zweiten Nachricht (52) und Erzeugen (150) eines Signals, das angibt, ob die mittels der zweiten Station (12) empfangenen beiden Nachrichten (51,52) übereinstimmen. Außerdem betrifft die Erfindung eine Kommunikationsvorrichtung (11,12) zur Durchführung zumindest einer Teilmenge der Schritte (110,120,130,140,150) des Kommunikationsverfahrens (100).

## Beschreibung

Die Erfindung betrifft ein Kommunikationsverfahren und eine Kommunikationsvorrichtung zum Erkennen von Übertragungsfehlern.

In heutigen Kommunikationsnetzen werden Fehlererkennungsalgorithmen dazu eingesetzt, Übertragungsfehler in übertragenen Daten zu erkennen und Anwendungen, die die empfangenen Daten nutzen, gegen ungewollte und/oder unerkannte Veränderungen der Daten zu schützen. Damit sich durch das Fehlererkennungsverfahren die für die Übertragung erforderliche Bandbreite nicht unnötig vergrößert, ist es üblich, auf der Sender- und auf der Empfängerseite rechenaufwändige Datensicherungsalgorithmen (beispielsweise CRC-Verfahren) zu implementieren. Echtzeitanwendungen erfordern, dass die Datensicherungsalgorithmen im Sender und im Empfänger in Echtzeit durchgeführt werden, wodurch die dadurch belegten Rechenkapazitäten während der Übertragung nicht für andere Zwecke genutzt werden können.

Die Aufgabe der vorliegenden Erfindung besteht darin, ein Kommunikationsverfahren und eine Kommunikationsvorrichtung bereitzustellen, mit dem bzw. mit der sich der Berechnungsaufwand auf der Sender- und Empfängerseite für eine vergleichbar effiziente Datensicherung verringert.

Erfindungsgemäß wird diese Aufgabe gelöst durch ein Kommunikationsverfahren zum Erkennen von Übertragungsfehlern, das folgende Verfahrensschritte umfasst:
- Bereitstellen eines Kommunikationsnetzes, an dem eine erste und eine zweite Station angeschlossen ist, wobei das Kommunikationsnetz zwischen der ersten und der zweiten Station mindestens zwei unterschiedliche Übertragungswege aufweist;
- Senden einer ersten Nachricht mit einem Nachrichteninhalt von der ersten Station zu der zweiten Station über einen ersten der mindestens zwei Übertragungswege;
- Senden einer zweiten Nachricht mit demselben Nachrichteninhalt von der ersten Station zu der zweiten Station über einen zweiten der mindestens zwei Übertragungswege; und
- Vergleichen der mittels der zweiten Station empfangenen ersten Nachricht mit der mittels der zweiten Station empfangenen zweiten Nachricht; und
- Erzeugen eines Signals, das angibt, ob die mittels der zweiten Station empfangenen beiden Nachrichten übereinstimmen.

Darüber hinaus wird die erfindungsgemäße Aufgabe mittels einer Kommunikationsvorrichtung, insbesondere Sendestation oder Empfangsstation, gelöst, die eine Schaltung und/oder ein Programm zur Durchführung der für die Sendestation und/oder der für die Empfangsstation relevanten Schritte des erfindungsgemäßen Kommunikationsverfahrens umfasst.

Durch Anwendung des erfindungsgemäßen Verfahrens verringert sich im Vergleich zu bekannten Fehlererkennungsverfahren der Aufwand für eine Überprüfung der übertragenen Nachricht auf Fehlerfreiheit.

Vorzugsweise sieht das Kommunikationsverfahren vor, dass die zweite Station ein positives Quittungssignal zur ersten Station sendet, wenn die mittels der zweiten Station empfangenen beiden Nachrichten übereinstimmen. Bei Eintreffen des positiven Quittungssignals kann in der ersten Station eine Entscheidung darüber getroffen werden, dass eine Wiederholung der Sendung der ersten und oder der zweiten Nachricht nicht durchgeführt oder abgebrochen wird.

Es kann von Vorteil sein, wenn die erste Station das Senden mindestens einer der beiden Nachrichten wiederholt, wenn sie innerhalb einer ersten vorbestimmten Zeit nach dem Senden der ersten oder nach dem Senden der zweiten Nachricht das positive Quittungssignal nicht empfängt. Bei Ausbleiben des positiven Quittungssignals kann in der ersten Station eine Entscheidung darüber getroffen werden, dass eine Wiederholung der Sendung der ersten und oder der zweiten Nachricht durchgeführt oder fortgesetzt wird. Hierdurch ein Übertragungsfehler nicht nur behoben, sondern auf einer niedrigen Protokollschicht auch korrigiert werden.

Unabhängig davon kann es zweckmäßig sein, wenn die zweite Station ein negatives Quittungssignal erster Art zur ersten Station sendet, wenn die mittels der zweiten Station empfangenen beiden Nachrichten nicht übereinstimmen. Wenn die zweite Station ein negatives Quittungssignal erster Art zur ersten Station sendet, wurde in der zweiten Station ein Übertragungsfehler erkannt. Bei Eintreffen des negativen Quittungssignals erster Art kann in der ersten Station eine Entscheidung darüber getroffen werden, dass eine Wiederholung der Sendung der ersten und oder der zweiten Nachricht durchgeführt oder fortgesetzt wird.

Eine Weiterentwicklung sieht vor, dass die zweite Station ein negatives Quittungssignal zweiter Art zur ersten Station sendet, wenn die zweite Station innerhalb einer vorbestimmten Zeit nach dem Empfangen einer der beiden Nachrichten die andere der beiden Nachrichten nicht empfängt. Wenn die zweite Station innerhalb einer vorbestimmten Zeit nach dem Empfangen einer der beiden Nachrichten die andere der beiden Nachrichten nicht empfängt, kann davon ausgegangen werden, dass ein Übertragungsfehler aufgetreten ist. Dies kann die zweite Station der ersten Station mittels eines negativen Quittungssignals zweiter Art mitteilen. Bei Eintreffen des negativen Quittungssignals zweiter Art kann in der ersten Station eine Entscheidung darüber getroffen werden, dass eine Wiederholung der Sendung der ersten und oder der zweiten Nachricht durchgeführt oder fortgesetzt wird. Die Codierung des negativen Quittungssignals zweiter Art kann, aber braucht sich nicht von der Codierung des negativen Quittungssignals erster Art unterscheiden. Die Nutzung des negativen Quittungssignals zweiter Art in der ersten Station kann, aber braucht sich nicht von der Nutzung des negativen Quittungssignals erster Art in der ersten Station unterscheiden.

Eine besondere Weiterentwicklung sieht vor, dass die erste Station das Senden mindestens einer der beiden Nachrichten wiederholt, wenn sie ein negatives Quittungssignal erster oder zweiter Art empfängt. Hierdurch kann ein Übertragungsfehler nicht nur behoben, sondern auch mittels eines einfach durchführbaren Protokolls korrigiert werden.

Es kann Vorteile haben, wenn ein Nachrichteninhalt in einem Datenbereich der ersten Nachricht anders codiert ist als derselbe Nachrichteninhalt in einem entsprechenden Datenbereich der zweiten Nachricht. Wenn die erste Nachricht so codiert ist wie die zweite Nachricht, kann es eine nicht zu vernachlässigende Restwahrscheinlichkeit geben, dass durch eine Übertragungsstörung beide Nachrichten in der gleichen Weise ungewollt verändert werden. Die Restwahrscheinlichkeit, dass so eine gleichsinnige Veränderung durch einen Vergleich der beiden Nachrichten bei der zweiten Station nicht erkannt wird, wäre dann ebenfalls nicht vernachlässigbar. Folglich kann (abhängig vom Fehlerverhalten der Übertragungswege) eine Wahrscheinlichkeit der Fehlererkennung erhöht werden, indem die erste Nachricht anders als die zweite Nachricht codiert wird.

Eine besonders bevorzugte Weiterbildung sieht vor, dass die erste Nachricht eine erste Nachrichtenkennung umfasst, welche mit einer Nachrichtenkennung der zweiten Nachricht übereinstimmt. Die Nachrichtenkennung kann eine Kennung der ersten Station, eine Kennung der zweiten Station und/oder eine Kennung der individuellen Nachricht umfassen. Wenn beide Nachrichten eine Nachrichtenkennung umfassen, die für beide Nachrichten gleichen Inhalt hat, wird in der zweiten Station eine Zuordnung der zweiten Nachricht zu der zugehörigen ersten Nachricht erleichtert, wenn beide Nachrichten bei der zweiten Station zu unterschiedlichen Zeiten eintreffen, insbesondere wenn eine Integrität der Nachrichtenreihenfolge nicht gewährleistet ist.

Insbesondere ist es von Vorteil, wenn das Vergleichen der ersten Nachricht mit der zweiten Nachricht mittels Firmware oder ausschließlich auf Hardwareebene durchgeführt wird. Hierdurch werden Lösungen gefördert, die eine hohe Übertragungsbandbreite für Nachrichten aufweisen und/oder kostengünstig und/oder mit geringem Energiebedarf im Betrieb realisiert werden können.

Die Erfindung ist anhand der beigefügten Zeichnungen näher erläutert, in denen zeigen:
- FIG 1: schematisch ein Kommunikationsnetz,
- FIG 2: ein schematisches Nachrichtenaustauschdiagramm des erfindungsgemäßen Kommunikationsverfahrens zur Erkennung und Behebung von Übertragungsfehlern und
- FIG 3: ein schematisches Ablaufdiagramm des Kommunikationsverfahrens zur Erkennung von Übertragungsfehlern.

Die nachfolgend näher geschilderten Ausführungsbeispiele stellen bevorzugte Ausführungsformen der vorliegenden Erfindung dar.

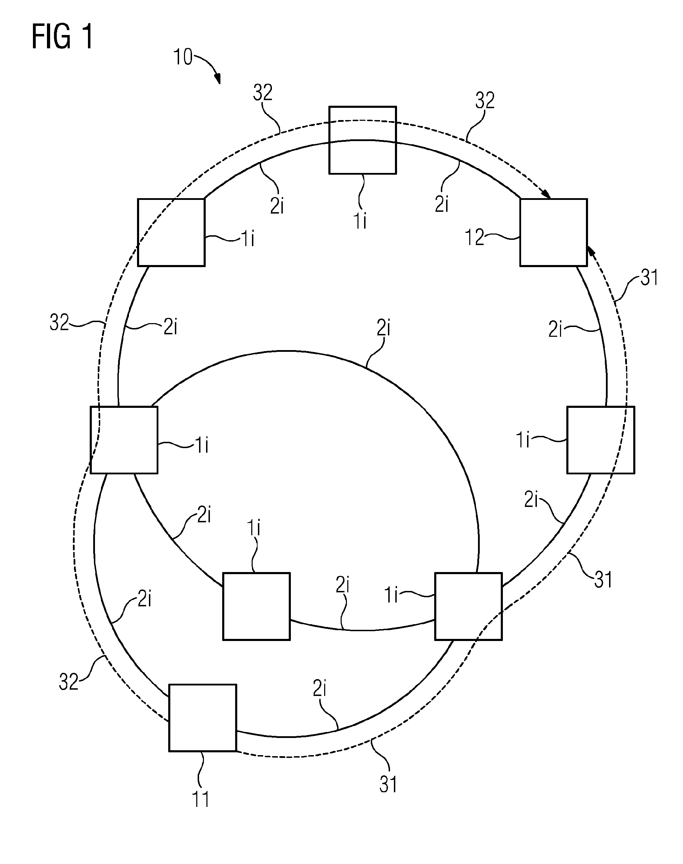

Das in FIG 1 gezeigte Ausführungsbeispiel eines Kommunikationsnetzes 10 umfasst mehrere Stationen 11, 12, 1i und Übertragungsstrecken 2i zwischen den Stationen 11, 12, 1i. In dem Beispiel bestehen zwischen jedem beliebigen Paar von Stationen 11, 12, 1i jeweils mindestens zwei unterschiedliche Übertragungswege 31, 32.

Zweckmäßig ist, wenn in dem Kommunikationsnetz 10 mindestens zwei unterschiedliche virtuelle Overlaynetze konfiguriert sind, für die in den Stationen 11, 12, 1i unterschiedliche Routingtabellen angewendet werden. Um zu erreichen, dass zwei Nachrichten, die von demselben Sender zu demselben Empfänger zu übertragen sind, das Kommunikationsnetz 10 auf unterschiedlichen Wegen durchlaufen, kann in den einzelnen Nachrichten jeweils ein Teil (beispielsweise ein Virtualnetzindikator oder eine Gerad- oder Ungeradzahligkeit einer laufenden Nachrichtenkennung) vorgesehen sein, der für die einzelne Nachricht festlegt, welches der mindestens zwei Overlaynetze die Nachricht durchlaufen soll. Außerdem können die Stationen 11, 12, 1i dazu vorbereitet sein, mittels dieses Teils der Nachrichten und einer Routingtabelle für jede weiterzuleitende Nachricht zu ermitteln, auf welcher Übertragungsstrecke 2i die Nachricht als nächstes in Richtung Empfänger 12 weiterzuleiten ist. In dieser Ausführungsvariante kann also der Sender 11 (beispielsweise dessen Busanschaltung) mittels eines Einschreibens eines Virtualnetzindikators in die Nachricht oder einer Auswahl einer Nachrichtenkennung mittelbar festlegen, auf welchem Weg die einzelne Nachricht das Kommunikationsnetz 10 durchläuft.

In einer alternativen Ausführungsvariante ist es auch möglich, in die Busanschaltung des Senders 11 zwei mittelbar oder direkt aufeinanderfolgende Nachrichten mit identischem Nachrichteninhalt (oder nur mit identischem Nachrichtenkopf) einzuspeisen, wobei die Busanschaltung des Senders 11 und die übrigen Stationen 1i, 12 dafür vorbereitet sein können, in Eigenverantwortung dafür zu sorgen, dass eine nachfolgende Nachricht, die einen identischen Nachrichteninhalt (oder nur einen identischen Nachrichtenkopf) wie die mittelbar oder direkt vorausgegangene Nachricht aufweist, in Richtung Empfänger 12 auf einem anderen Übertragungsweg 32 als die mittelbar oder direkt vorausgegangene Nachricht weitergeleitet wird.

Es sind auch Varianten des Kommunikationsnetzes 10 möglich, in denen ein Teil der Stationen 11, 12, 1i oder alle Stationen 11, 12, 1i dazu vorgesehen sind, jeweils entweder nur als Sendevorrichtung und nicht als Empfangsvorrichtung oder nur als Empfangsvorrichtung und nicht als Sendevorrichtung zu wirken.

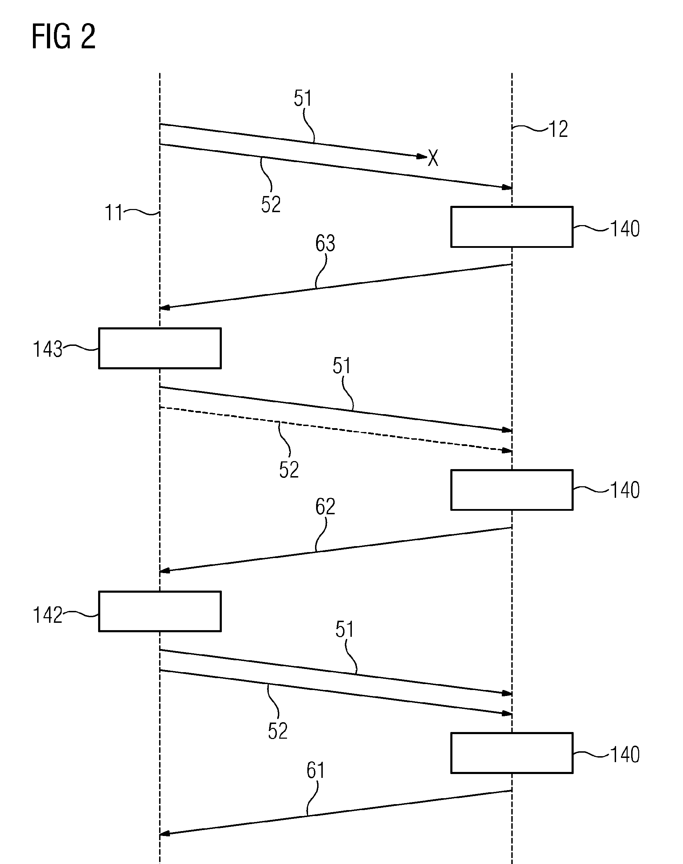

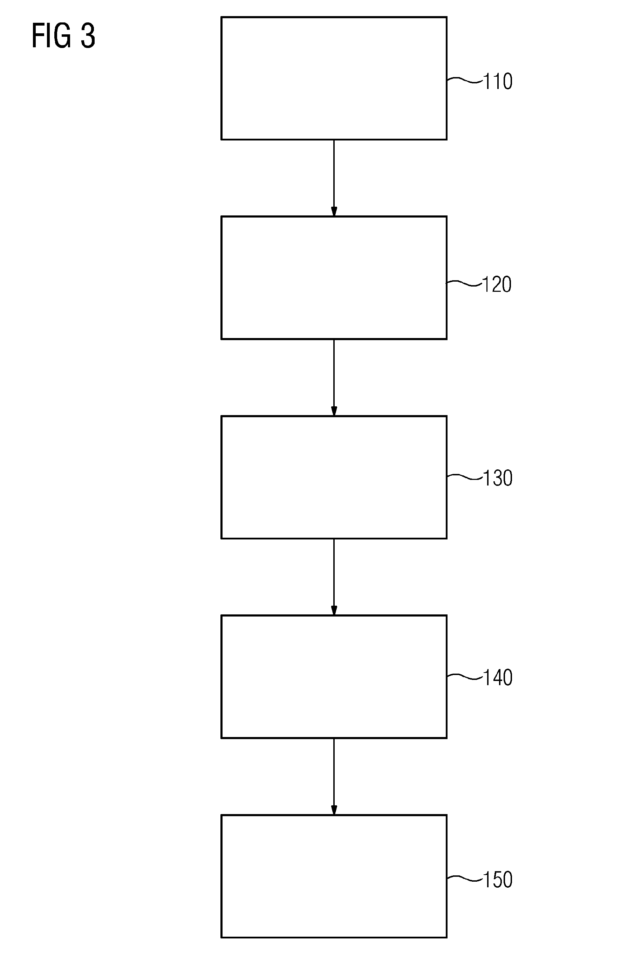

Die linke Seite des in FIG 2 gezeigten Nachrichtenaustauschdiagramms repräsentiert die sendende Station 11, während die rechte Seite des Diagramms die empfangende Station 12 repräsentiert. Die FIG 3 zeigt die Schritte 110, 120, 130, 140, 150 des Kommunikationsverfahrens 100 in einem Ablaufdiagramm. In einem ersten Schritt 110 wird ein Kommunikationsnetz 10 bereitgestellt, an dem eine erste 11 und eine zweite 12 Station angeschlossen ist, wobei das Kommunikationsnetz 10 zwischen der ersten 11 und der zweiten 12 Station mindestens zwei unterschiedliche Übertragungswege 31, 32 aufweist. In einem zweiten Schritt 120 sendet die erste Station 11 über einen ersten 31 der mindestens zwei Übertragungswege 31, 32 eine erste Nachricht 51 (siehe FIG 2) mit einem Nachrichteninhalt zu der zweiten Station 12. In einem dritten Schritt 130 sendet die erste Station 11 über einen zweiten 32 der mindestens zwei Übertragungswege 31, 32 eine zweite Nachricht 52 (siehe FIG 2) mit einem selben Nachrichteninhalt zu der zweiten Station 12. In einem vierten Schritt 140 vergleicht die zweite Station 12 die empfangene erste Nachricht 51 mit der empfangenen zweiten Nachricht 52. In einem fünften Schritt 150 erzeugt die zweite Station 12 unter Berücksichtigung des Vergleichsergebnisses ein Signal, das angibt, ob die mittels der zweiten Station 12 empfangenen beiden Nachrichten 51, 52 übereinstimmen.

Eine Weiterbildung des Kommunikationsverfahrens 100 sieht vor, dass die zweite Station 22 ein positives Quittungssignal 61 (siehe FIG 2) zur ersten Station 11 sendet, wenn die empfangenen beiden Nachrichten 51, 52 übereinstimmen.

Darauf baut zweckmäßigerweise eine weitere Weiterbildung des Kommunikationsverfahrens 100 auf, die darin besteht, dass die erste Station 11 das Senden mindestens einer der beiden Nachrichten 51, 52 wiederholt, wenn sie innerhalb einer ersten vorbestimmten Zeit nach dem Senden der ersten 51 oder der zweiten 52 Nachricht das positive Quittungssignal 61 nicht empfängt.

Unabhängig davon kann auch vorgesehen sein, dass die zweite Station 12 ein negatives Quittungssignal 62 (siehe FIG 2) erster Art zur ersten Station 11 sendet, wenn die mittels der zweiten Station 12 empfangenen beiden Nachrichten 51, 52 nicht übereinstimmen.

Außerdem kann das Kommunikationsverfahren 100 vorsehen, dass die zweite Station 12 ein negatives Quittungssignal 63 (siehe FIG 2) zweiter Art zur ersten Station 11 sendet, wenn die zweite Station 12 innerhalb einer vorbestimmten Zeit nach dem Empfangen einer der beiden Nachrichten 51, 52 die andere der beiden Nachrichten 51, 52 nicht empfängt.

Für den Fall, dass die erste Station 11 ein negatives Quittungssignal 62, 63 empfängt, kann vorgesehen sein, dass die erste Station 11 nach Auswertung 142, 143 des negativen Quittungssignals 62, 63 das Senden einer der beiden 51, 52 oder das Senden beider Nachrichten 51, 52 wiederholt.

Um systematische Verfälschungen auf den Übertragungswegen 31, 32 zu erkennen, ist es von Vorteil in dem Kommunikationsverfahren 100 vorzusehen, dass ein Nachrichteninhalt in einem Datenbereich der ersten Nachricht 51 anders codiert ist als derselbe Nachrichteninhalt in einem entsprechenden Datenbereich der zweiten Nachricht 52.

Um die erste 51 und die zweite 52 Nachricht beim Empfänger 12 für den nachfolgenden Vergleich 140 mit geringem Aufwand paarweise einander zuordnen zu können, sieht eine Weiterbildung vor, dass die erste Nachricht 51 eine erste Nachrichtenkennung umfasst, welche mit einer Nachrichtenkennung der zweiten Nachricht 52 übereinstimmt.

Um eine Zeitverzögerung und einen Energieverbrauch für das Durchführen des Vergleichs zu minimieren, ist es von Vorteil, wenn das Vergleichen 140 der ersten Nachricht 51 mit der zweiten Nachricht 52 mittels Firmware oder ausschließlich mittels Hardware durchgeführt wird.

Stationen 11, 1i, die dazu vorgesehen sind, Nachrichten 51, 52 an mindestens eine der empfangenden Stationen 12, 1i zu senden, umfassen jeweils eine Schaltung und/oder ein Programm zur Durchführung der für die sendende Station 11, 1i relevanten Schritte des Kommunikationsverfahrens 100.

Stationen 12, 1i, die dazu vorgesehen sind, Nachrichten 52 von mindestens einer der sendenden Stationen 11, 1i zu empfangen, umfassen jeweils eine Schaltung und/oder ein Programm zur Durchführung der für die empfangende Station 12, 1i relevanten Schritte des Kommunikationsverfahrens 100.

## Patentansprüche

1. Kommunikationsverfahren (100) zum Erkennen von Übertragungsfehlern, **dadurch gekennzeichnet, dass** das Verfahren (100) folgende Schritte (110,120,130,140,150) umfasst:
- Bereitstellen (110) eines Kommunikationsnetzes (10), an dem eine erste (11) und eine zweite (12) Station angeschlossen ist, wobei das Kommunikationsnetz (10) zwischen der ersten (11) und der zweiten (12) Station mindestens zwei unterschiedliche Übertragungswege (31,32) aufweist;
- Senden (120) einer ersten Nachricht (51) mit einem Nachrichteninhalt von der ersten Station (11) zu der zweiten Station (12) über einen ersten (31) der mindestens zwei Übertragungswege (31,32);
- Senden (130) einer zweiten Nachricht (52) mit demselben Nachrichteninhalt von der ersten Station (11) zu der zweiten Station (12) über einen zweiten (32) der mindestens zwei Übertragungswege (31,32);
- Vergleichen (140) der mittels der zweiten Station (12) empfangenen ersten Nachricht (51) mit der mittels der zweiten Station (12) empfangenen zweiten Nachricht (52); und
- Erzeugen (150) eines Signals, das angibt, ob die mittels der zweiten Station (12) empfangenen beiden Nachrichten (51,52) übereinstimmen.

2. Kommunikationsverfahren (100) nach Anspruch 1, **dadurch gekennzeichnet, dass** die zweite Station (12) ein positives Quittungssignal (61) zur ersten Station (11) sendet, wenn die mittels der zweiten Station (12) empfangenen beiden Nachrichten (51,52) übereinstimmen.

3. Kommunikationsverfahren (100) nach Anspruch 2, **dadurch gekennzeichnet, dass** die erste Station (11) das Senden (120,130) mindestens einer der beiden Nachrichten (51,52) wiederholt, wenn sie innerhalb einer ersten vorbestimmten Zeit nach dem Senden (120) der ersten (51) oder nach dem Senden (130) der zweiten (52) Nachricht das positive Quittungssignal (61) nicht empfängt.

4. Kommunikationsverfahren (100) nach einem der Ansprüche 1 bis 3, **dadurch gekennzeichnet, dass** die zweite Station (12) ein negatives Quittungssignal (62) erster Art zur ersten Station (11) sendet, wenn die mittels der zweiten Station (12) empfangenen beiden Nachrichten (51,52) nicht übereinstimmen.

5. Kommunikationsverfahren (100) nach einem der Ansprüche 1 bis 4, **dadurch gekennzeichnet, dass** die zweite Station (12) ein negatives Quittungssignal (63) zweiter Art zur ersten Station (11) sendet, wenn die zweite Station (12) innerhalb einer vorbestimmten Zeit nach dem Empfangen einer der beiden Nachrichten (51,52) die andere der beiden Nachrichten (51,52) nicht empfängt.

6. Kommunikationsverfahren (100) nach Anspruch 4 oder 5, **dadurch gekennzeichnet, dass** die erste Station (11) das Senden (120,130) mindestens einer der beiden Nachrichten (51,52) wiederholt, wenn sie ein negatives Quittungssignal (62,63) erster oder zweiter Art empfängt.

7. Kommunikationsverfahren (100) nach einem der Ansprüche 1 bis 6, **dadurch gekennzeichnet, dass** ein Nachrichteninhalt in einem Datenbereich der ersten Nachricht (51) anders codiert ist als derselbe Nachrichteninhalt in einem entsprechenden Datenbereich der zweiten Nachricht (52).

8. Kommunikationsverfahren (100) nach einem der Ansprüche 1 bis 7, **dadurch gekennzeichnet, dass** die erste Nachricht (51) eine erste Nachrichtenkennung umfasst, welche mit einer Nachrichtenkennung der zweiten Nachricht (52) übereinstimmt.

9. Kommunikationsverfahren (100) nach einem der Ansprüche 1 bis 8, **dadurch gekennzeichnet, dass** das Vergleichen (140) der ersten Nachricht (51) mit der zweiten Nachricht (52) mittels Firmware oder ausschließlich mittels Hardware durchgeführt wird.

10. Kommunikationsvorrichtung (11,12), insbesondere Sendestation (11) oder Empfangsstation (12), **dadurch gekennzeichnet, dass** die Kommunikationsvorrichtung (11,12) eine Schaltung und/oder ein Programm zur Durchführung der für die Sendestation (11) und/oder der für die Empfangsstation relevanten Schritte des Kommunikationsverfahrens (100) nach einem der Ansprüche 1 bis 9 umfasst.

## Geänderte Patentansprüche

### Geänderte Patentansprüche gemäss Regel 137(2) EPÜ.

**1.** Kommunikationsverfahren (100) zum Erkennen von Übertragungsfehlern, **dadurch gekennzeichnet, dass** das Verfahren (100) folgende Schritte umfasst:
- Bereitstellen (110) eines Kommunikationsnetzes (10), an dem eine erste (11) und eine zweite (12) Station angeschlossen ist, wobei das Kommunikationsnetz (10) zwischen der ersten (11) und der zweiten (12) Station mindestens zwei unterschiedliche Übertragungswege (31, 32) aufweist;
- Einspeisen zweier mittelbar oder direkt aufeinanderfolgender Nachrichten mit identischem Nachrichteninhalt oder nur mit identischem Nachrichtenkopf in eine Busanschaltung;
- Senden (120) einer ersten Nachricht (51) mit einem Nachrichteninhalt von der ersten Station (11) zu der zweiten Station (12) über einen ersten (31) der mindestens zwei Übertragungswege (31, 32);
- Senden (130) einer zweiten Nachricht (52) mit demselben Nachrichteninhalt von der ersten Station (11) zu der zweiten Station (12) über einen zweiten (32) der mindestens zwei Übertragungswege (31, 32), wobei die Busanschaltung in Eigenverantwortung dafür sorgt, dass eine nachfolgende Nachricht, die einen identischen Nachrichteninhalt oder nur einen identischen Nachrichtenkopf wie eine mittelbar oder direkt vorausgegangene Nachricht aufweist, in Richtung der zweiten Station (12) auf einem anderen Übertragungsweg als die mittelbar oder direkt vorausgegangene Nachricht weitergeleitet wird;
- Vergleichen (140) der mittels der zweiten Station (12) empfangenen ersten Nachricht (51) mit der mittels der zweiten Station (12) empfangenen zweiten Nachricht (52); und
- Erzeugen (150) eines Signals, das angibt, ob die mittels der zweiten Station (12) empfangenen beiden Nachrichten (51, 52) übereinstimmen.
